# EUROPEAN PATENT SPECIFICATION

(11) **EP 3 708 268 B1**
(45) Date of publication and mention of the grant of the patent: **03.05.2023**
(21) Application number: 18874085.6
(22) Date of filing: 06.11.2018
(51) Int. Cl.: B08B 15/02, F16K 1/22, F16K 1/16, F16K 1/32, B01L 1/04, G05D 7/06

(54) **ADJUSTMENT-FREE AIR CURTAIN TYPE VENTILATION CABINET AND AIR DISCHARGING SYSTEM**
LÜFTUNGSKASTEN MIT EINSTELLLOSEM LUFTVORHANG UND LUFTAUSLASSSYSTEM
ARMOIRE DE VENTILATION DE TYPE RIDEAU D'AIR SANS AJUSTEMENT ET SYSTÈME DE DÉCHARGE D'AIR

(30) Priority: 06.11.2017 CN 201711080299
(43) Date of publication of application: 16.09.2020
(73) Proprietor: Shandong Lonton Power Technology Co., Ltd., Ji'nan, Shandong 250101 (CN)
(72) Inventor: YUE, Bin, Ji'nan Shandong 250101 (CN); YUE, Se, Ji'nan Shandong 250101 (CN); ZHANG, Zhongying, Ji'nan Shandong 250101 (CN)
(74) Representative: Hertin und Partner Rechts- und Patentanwälte PartG mbB
(86) International application number: PCT/CN2018/114202
(87) International publication number: WO 2019/086046

(56) References cited:
- CN-A- 105 257 830
- CN-A- 107 671 100
- CN-U- 204 934 175
- CN-U- 206 184 895
- CN-U- 207 615 330
- CN-U- 207 621 364
- TW-A- 201 634 137
- US-A- 4 155 289
- US-A1- 2010 267 321
- US-A1- 2010 267 321
- US-A1- 2011 117 828

## Description

### Cross-Reference to Related Applications

The present disclosure claims priority of Chinese Patent Application No. CN 107671100 A, filed with the Chinese Patent Office on November 6, 2017, entitled "Adjustment-free Air-curtain-type Fume Cabinet".

### Technical Field

The present disclosure relates to the technical field of fume cabinets (or hoods, cupboards), and in particular to an adjustment-free air-curtain-type fume cabinet and an exhaust system.

### Background Art

A fume cabinet is an indispensable constituent part of the ventilation design for a laboratory. A laboratory should be ventilated well in order to protect laboratory staffs from inhaling or swallowing some chemicals and organisms which are toxic, pathogenic, or has unknown toxicity, and contaminants must be removed using a fume cabinet, a fume hood, or a local ventilation method in order to prevent the absorption of some vapors, gases, and particulates (smoke, soot, dust, and aerosols).

During the use of the existing fume cabinet, it is necessary to continuously adjust the ventilation volume and ventilation pressure in the practical work to control the ventilation volume inside the entire fume cabinet. In a case where an opening angle of an air valve is continuously adjusted under the condition with different ventilation pressures to open and adjust the ventilation volume, not only the adjustment accuracy cannot be accurately controlled, but also the operation is cumbersome, in order to meet different requirements, continuous adjustments are required according to the requirements, and thus the working efficiency is reduced.

CN 105 257 830 A belongs to the prior art and discloses a fume cabinet comprising a closable venturi valve which is mounted to an exhaust duct.

US 201010267321 A1 belongs to the prior art and describes a biological safety cabinet with an air curtain to isolate air inside and outside the cabinet.

US 4 155 289 A also belongs to the state of the art and discloses an energy saving ambient pressure compensating laboratory fume hood system which provides safe, economical, constant-velocity hood intake at all positions of hood access-opening and regardless of ambient pressure changes by means of venturi structure linked to the hood sash

CN 206 184 895 U belongs to the prior art and discloses an adjustment-free air-curtain-type fume cabinet in accordance with the preamble of claim 1. It describes an adjustment-free air-curtain-type fume cabinet, comprising a cabinet body, an exhaust box, a window, an air curtain machine, a supplementary air duct and an exhaust duct, wherein the air curtain machine is configured to form an air wall at an opening in the exhaust box to prevent an exchange of airflows inside and outside the exhaust box at the opening.

### Summary

Objects of the present disclosure include, for example, providing an adjustment-free air-curtain-type fume cabinet (or ventilation cabinet), which can be set at an air volume in the factory, and delivers a completely constant air volume during use, and thus meets the requirements for use of a constant-air-volume fume cabinet.

Objects of the present disclosure also include, for example, providing an exhaust system which has all the functions of the adjustment-free air-curtain-type fume cabinet.

In accordance with the invention, the adjustment-free air-curtain-type fume cabinet of claim 1 is provided.

Embodiments of the present disclosure are implemented as follows:
An embodiment of the present disclosure provides an adjustment-free air-curtain-type fume cabinet, including a cabinet body and uprights provided on the cabinet body, wherein a vertically movable window is mounted to the uprights, an air curtain machine is mounted at an upper end of the window, an exhaust duct and a supplementary air duct are mounted at an upper end of the cabinet body, the exhaust duct is connected with an exhaust box, the exhaust box is provided with an upper exhaust hole at its upper end and provided with a lower exhaust hole at its lower end, an air deflector is provided at a connection position between the supplementary air duct and the cabinet body, the exhaust duct is connected with an external closable venturi valve, the closable venturi valve includes a valve body, a rotary blade and a ball are provided inside the valve body, wherein the ball is movably mounted on a fixed rod, a spring is provided on the ball and the fixed rod, the fixed rod is fixedly provided in the valve body by means of a fixing holder, and the fixed rod and the fixing holder are fixedly connected with each other by a bolt.

Optionally, a pushing device for pushing the ball is further provided on an inner wall of the valve body, wherein the pushing device includes an upper pushing rod and a lower pushing rod, the upper pushing rod and the lower pushing rod are connected with each other by a torsion spring, the lower pushing rod is movably disposed in a slide groove provided in the inner wall of the valve body by a locking plate, the upper pushing rod is located below the rotary blade, and the lower pushing rod is provided above the ball.

Optionally, the upper pushing rod is located below the rotary blade when the rotary blade is in a state where the closable venturi valve is closed, and a groove is provided at a position on the valve body near the upper pushing rod.

Optionally, the locking plate is provided inside the slide groove, a compression spring combined with the locking plate is further provided inside the slide groove, and the compression spring serves the function of resetting the lower pushing rod and the upper pushing rod.

Optionally, two locking plates are provided on the lower pushing rod, wherein the two locking plates are arranged at an interval along a height direction of the cabinet body, and the two locking plates are both movably provided in the slide groove.

Optionally, the upper pushing rod and the lower pushing rod are movably connected with each other by a torsion spring, a groove is provided in the inner wall of the valve body, the groove corresponds to the upper pushing rod, and the upper pushing rod can be inclined toward the direction of the groove and reset by the torsion spring.

Optionally, the bottommost end of the lower pushing rod is provided with rounded corners.

An embodiment of the present disclosure further provides an adjustment-free air-curtain-type fume cabinet, including a cabinet body, an exhaust box, a window, an air curtain machine, a supplementary air duct, an exhaust duct, and a closable venturi valve, wherein the exhaust box is mounted on the cabinet body, the exhaust box is provided with an opening, and both the exhaust duct and the supplementary air duct communicate with the exhaust box; the window is slidably mounted to the cabinet body, and the window slides reciprocatingly in a height direction of the cabinet body relative to the cabinet body to change the height of the opening; the air curtain machine is mounted to the cabinet body, and the air curtain machine is configured to form an air wall at the opening to prevent an exchange of airflows inside and outside the exhaust box at the opening; and the closable venturi valve is mounted on the exhaust duct.

Optionally, the supplementary air duct communicates with the exhaust box at the top of the exhaust box, and the exhaust duct communicates with the exhaust box at a side of the exhaust box.

Optionally, an exhaust hole(s) is provided at a side of the exhaust box, wherein a port of the exhaust duct is hermetically connected with the exhaust hole, and the exhaust hole is provided opposite to the opening.

Optionally, the exhaust hole(s) includes an upper exhaust hole(s) and a lower exhaust hole(s), the upper exhaust hole(s) and the lower exhaust hole(s) are arranged at intervals along the height direction of the cabinet body, the upper exhaust hole(s) are adjacent to the top of the exhaust box, and the lower exhaust hole(s) are adjacent to the bottom of the exhaust box.

Optionally, the air curtain machine is mounted on the window and slides in synchronization with the window.

Optionally, a flow control plate is mounted above the exhaust hole, wherein the flow control plate has a guide side and a mounting side, the mounting side is mounted to an inner side wall of the exhaust box, and a distance between the flow control plate and the inner side wall gradually decreases from the guide side to the mounting side along the height direction of the exhaust box.

Optionally, the adjustment-free air-curtain-type fume cabinet further includes an air deflector, wherein the air deflector is mounted at the top of the exhaust box, and the air deflector is configured such that an airflow entering the exhaust box from the supplementary air duct flows toward the side where the opening is located.

Optionally, the exhaust duct includes a first duct section and a second duct section, wherein the first duct section communicates with the second duct section, the first duct section is mounted to an outer side wall of the exhaust box, and both the upper exhaust hole and the lower exhaust hole communicate with the first duct section; the projection of the second duct section onto the top of the exhaust box along a length direction of the first duct section is located at the top of the exhaust box, and the closable venturi valve is mounted on the second duct section.

Optionally, the adjustment-free air-curtain-type fume cabinet further includes uprights, wherein the uprights are disposed perpendicular to the cabinet body, the exhaust box is located in a region surrounded by the uprights, and the window is slidably mounted to the uprights.

Optionally, the closable venturi valve includes a valve body, a rotary blade, a ball, a fixing holder, a fixed rod, and an elastic member, wherein the valve body has a flow channel, the two ends of the flow channel in its length direction are an inlet port and an outlet port respectively, the inlet port communicates with an end of the exhaust duct remote from the exhaust box, the rotary blade is rotatably mounted in the valve body and is adjacent to the outlet port, and the flow channel can be opened or closed when the rotary blade is rotated; the fixing holder is mounted in the valve body, the fixed rod is mounted to the fixing holder, the ball is slidably mounted on the fixed rod, one end of the elastic member is positionally limited by the fixed rod, the other end of the elastic member is positionally limited by the ball, and the elastic member allows the ball to have a tendency of sliding from the outlet port to the inlet port in a direction of a central axis of the valve body.

Optionally, the fixed rod is screwed to the fixing holder.

Optionally, the adjustment-free air-curtain-type fume cabinet further includes a pushing device located in the flow channel, wherein the pushing device includes an upper pushing rod, a lower pushing rod, a torsion spring, and an elastic rest member, the upper pushing rod and the lower pushing rod are connected by the torsion spring, the upper pushing rod and the lower pushing rod are located between the ball and the rotary blade, the lower pushing rod is slidably disposed on an inner wall of the valve body, the lower pushing rod and the valve body are connected by the elastic reset member, the elastic reset member allows the lower pushing rod to have a tendency of sliding close to the rotary blade in the direction of the central axis of the valve body, and the rotary blade rotates to drive the upper pushing rod to rotate relative to the lower pushing rod and simultaneously drive the lower pushing rod to slide relative to the valve body so that the lower pushing rod forces the ball to move toward the inlet port.

An embodiment of the present disclosure further discloses an exhaust system, including an exhaust fan and an adjustment-free air-curtain-type fume cabinet mentioned above, wherein the exhaust fan has an air inlet communicating with a port of the exhaust duct remote from the exhaust box.

Compared with the prior art, the embodiments of the present disclosure include, for example, the following advantageous effects:
In summary, in an adjustment-free air-curtain-type fume cabinet according to an embodiment of the present disclosure, an air wall is formed by an air curtain machine to block the exchange of gas inside and outside the fume cabinet, so that toxic and harmful gases are discharged at a small stable air volume to prevent the leakage of the toxic and harmful gases into the laboratory. A closable venturi valve is utilized and a complicated actuator structure is removed. A butterfly valve is used to achieve rapid opening and closing. The ball adjusts the ventilation area under the action of a spring along with a change in pressure from the duct so as to maintain a constant ventilation volume. The pushing device provided is used for effectively preventing the ball from being stuck due to excessively large negative pressure in the duct. The embodiments of the present disclosure are designed to effectively alleviate the defect of a venturi valve which cannot be completely closed. The combination of the adjustment-free venturi valve with the air-curtain-type fume cabinet achieves a smaller constant air volume instead of a complicated variable-air-volume exhaust system, involves simple exhaust and supplementary air control systems, is operating stably and reliably, and can be operated and maintained conveniently.

### Brief Description of Drawings

In order to more clearly illustrate technical solutions of embodiments of the present disclosure, drawings required for use in the embodiments will be described briefly below. It is to be understood that the drawings below are merely illustrative of some embodiments of the present disclosure, and therefore should not be considered as limitations on its scope. It will be understood by those of ordinary skill in the art that other relevant drawings can also be obtained from these drawings without any inventive effort.
FIG. 1 is a sectional view illustrating the inside of an adjustment-free air-curtain-type fume cabinet according to an embodiment of the present disclosure;
FIG. 2 is another sectional view illustrating the inside of the adjustment-free air-curtain-type fume cabinet according to the embodiment of the present disclosure;
FIG. 3 is an enlarged view of part A in FIG. 1; and
FIG. 4 is a structural view of a pushing device of an adjustment-free air-curtain-type fume cabinet according to an embodiment of the present disclosure.

Reference Numerals: 1-valve body; 101-flow channel; 102-inlet port; 103-outlet port; 104-first flow section; 105-second flow section; 106-third flow section; 2-rotary blade; 3-ball; 4-fixed rod; 5-spring; 6-fixing holder; 7-closable venturi valve; 8-upper pushing rod; 9-lower pushing rod; 10-torsion spring; 11-locking plate; 12-compression spring; 13-groove; 14-slide groove; 15-cabinet body; 16-upright; 17-exhaust duct; 171-first duct section; 172-second duct section; 18-window; 19-air curtain machine; 20-exhaust box; 21-lower exhaust hole; 22-air deflector; 23-upper exhaust hole; 24-supplementary air duct; 25-opening; 26-flow control plate; 261-guide side; 262-mounting side ; 27-positioning column; 28-limit protrusion; 29-bolt.

### Detailed Description of Embodiments

In order to further clarify the objects, technical solutions, and advantages of the embodiments of the present disclosure, the technical solutions of the embodiments of the present disclosure will be described below clearly and completely with reference to the drawings of the embodiments of the present disclosure. It is apparent that the embodiments to be described are some, rather than all of the embodiments of the present disclosure. Generally, the components of the embodiments of the present disclosure, as described and illustrated in the figures herein, may be arranged and designed in a wide variety of different configurations. Thus, the following detailed description of the embodiments of the present disclosure, as represented in the figures, is not intended to limit the scope of the present disclosure as claimed, but is merely representative of selected embodiments of the present disclosure. All the other embodiments obtained by those of ordinary skill in the art in light of the embodiments of the present disclosure without inventive efforts will fall within the scope of the present disclosure as claimed. The invention is delimited by the appended claims.

It should be noted that similar reference numerals and letters refer to similar items in the following figures, and thus once an item is defined in one figure, it may not be further defined or explained in the following figures.

In the description of the present disclosure, it should be noted that orientation or positional relations indicated by the terms such as "center", "up", "down", "left", "right", "vertical", "horizontal", "inside", and "outside" are the orientation or positional relations shown based on the figures, or the orientation or positional relations in which the inventive product is conventionally placed in use, and these terms are intended only to facilitate the description of the present disclosure and simplify the description, but not intended to indicate or imply that the referred devices or elements must be in a particular orientation or constructed or operated in the particular orientation, and therefore should not be construed as limiting the present disclosure. In addition, terms such as "first", "second", and "third" are used for distinguishing the description only, and should not be understood as an indication or implication of relative importance.

In addition, terms such as "first", "second", and "third", if present, are used for distinguishing the description only, and should not be understood as an indication or implication of relative importance.

In addition, the term "horizontal", "vertical", "overhanging", or the like, if present, does not mean that a component is required to be absolutely horizontal or overhanging, but means that the component may be slightly inclined. For example, by the term "horizontal", it is simply meant that its direction is more horizontal than the term "vertical", and it is not meant that the structure must be completely horizontal, but it is meant that the structure may be slightly inclined.

In the description of the present disclosure, it should also be noted that terms such as "disposed", "mounted", "coupled", and "connected", if present, should be understood broadly unless otherwise expressly specified or defined. For example, connection may be fixed connection or detachable connection or integral connection, may be mechanical connection or electric connection, or may be direct coupling or indirect coupling via an intermediate medium or internal communication between two elements. The specific meanings of the above-mentioned terms in the present disclosure can be understood by those of ordinary skill in the art according to specific situations.

It should be noted that the features in the embodiments of the present disclosure may be combined with each other without conflict.

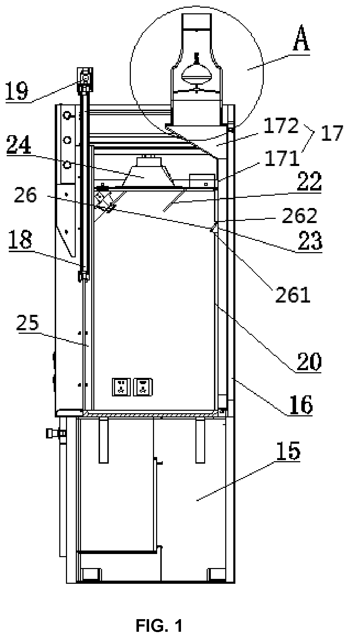

Referring to FIG. 1 to FIG. 3, an embodiment of the present disclosure provides an adjustment-free air-curtain-type fume cabinet (a fume cabinet of air-curtain-type and free of adjustment), including a cabinet body 15 and uprights (or pillars) 16 provided on the cabinet body 15. A window 18 movable reciprocatingly in a height direction of the cabinet body is mounted to the uprights 16. An air curtain machine 19 is mounted at an upper end of the window 18. An exhaust duct 17 and a supplementary air duct 24 are mounted at an upper end of the cabinet body 15. The exhaust duct 17 is connected with an exhaust box 20. The supplementary air duct 24 communicates with the exhaust box 20. An upper exhaust hole 23 is provided in an upper end of a side of the exhaust box 20, and a lower exhaust hole 21 is provided in a lower end of the side of the exhaust box 20. An air deflector 22 is provided at a connection position between the supplementary air duct 24 and the cabinet body 15. The exhaust duct 17 is connected with an external closable venturi valve 7. The closable venturi valve 7 includes a valve body 1. A rotary blade 2 and a ball 3 are provided inside the valve body 1. The ball 3 is movably mounted on a fixed rod 4. An elastic member is provided on the ball 3 and the fixed rod 4. The elastic member may be a spring 5. The fixed rod 4 is fixedly provided in the valve body 1 by a fixing holder 6. The fixed rod 4 and the fixing holder 6 are fixedly connected with each other by a bolt 29.

Optionally, a pushing device for pushing (or lifting) the ball 3 is further provided on an inner wall of the valve body 1. The pushing device includes an upper pushing rod 8 and a lower pushing rod 9. The upper pushing rod 8 and the lower pushing rod 9 are connected by a torsion spring 10. The lower pushing rod 9 is movably disposed in a slide groove 14 provided in the inner wall of the valve body 1 by a locking plate 11. The length direction of the slide groove 14 extends parallel to the direction of the central axis of the valve body 1. The locking plate 11 reciprocatingly slides in the slide groove 14 relative to the valve body 1 in the direction of the central axis of the valve body 1 to drive the lower pushing rod 9 and the upper pushing rod 8 to slide reciprocatingly. The upper pushing rod 8 is located below the rotary blade 2. The lower pushing rod 9 is provided above the ball 3. The upper pushing rod 8 and the lower pushing rod 9 are located between the rotary blade 2 and the ball 3.

It should be noted that the rotary blade 2 may be a circular disc. Correspondingly, an inner contour of a cross section of the valve body 1 is in the shape of a circle. The shape and size of the rotary blade 2 are identical to the shape and size of the inner contour of the cross section of the valve body 1. When the rotary blade 2 rotates to a position perpendicular to the central axis of the valve body 1, the rotary blade 2 blocks the valve body 1, and at this time, the closable venturi valve 7 is in a closed state. When the rotary blade 2 rotates to a position parallel to the central axis of the valve body 1, the valve body 1 is unblocked by the rotary blade 2, and at this time, the closable venturi valve 7 is in an open state.

It should be noted that the air curtain machine 19 may be directly installed on the cabinet body 15, wherein the air curtain machine 19 is located outside the window 18, and the position of the air curtain machine 19 is fixed and immovable relative to the window 18. When the position of the window 18 is being adjusted, the air curtain machine 19 does not move together with the window 18, such that adjustment of the window 18 is more flexible.

Optionally, when the rotary blade 2 rotates to a state where the closable venturi valve 7 is closed, the upper pushing rod 8 is located below the rotary blade 2. A groove 13 configured to allow the upper pushing rod 8 to be retreated therein is provided at a position on the valve body 1 near the upper pushing rod 8. The upper pushing rod 8 may be inclined toward the direction of the groove 13 and reset by the torsion spring 10.

Optionally, one side of the locking plate 11 is mounted on the lower pushing rod 9, and the other side of the locking plate 11 is slidably provided in the slide groove 14. An elastic reset or return member combined with the locking plate 11 is further mounted in the slide groove 14. The elastic reset member may be a compression spring 12. The compression spring 12 serves the function of resetting the lower pushing rod 9 and the upper pushing rod 8. Optionally, a positioning column 27 is mounted on a side wall of the slide groove 14 remote from the rotary blade 2. The positioning column 27 is parallel to the central axis of the valve body 1. The compression spring 12 is sleeved around the positioning column 27. The locking plate 11 is slidably provided on the positioning column 27. The compression spring 12 is located between the locking plate and the side wall of the slide groove 14 remote from the rotary blade 12.

Optionally, two locking plates, i.e., an upper and a lower locking plate 11 are provided on the lower pushing rod 9. Correspondingly, two slide grooves 14 are provided in the inner wall of the valve body 1. The two slide grooves 14 are independent of each other and are arranged in the direction of the central axis of the valve body 1. The two locking plates 11 are movably arranged in the two slide grooves 14, respectively.

It should be noted that one compression spring 12 may be provided and located between the slide grooves 14 and the locking plate 11 paired with each other, or two compression springs 12 may be provided and located between two pairs of slide grooves 14 and locking plates 11 provided in pair, respectively.

As a preferred embodiment, the bottommost end of the lower pushing rod 9 is provided with rounded corners (or chamfers). In other words, an end of the lower pushing rod 9 remote from the upper pushing rod 8 is provided with rounded corners.

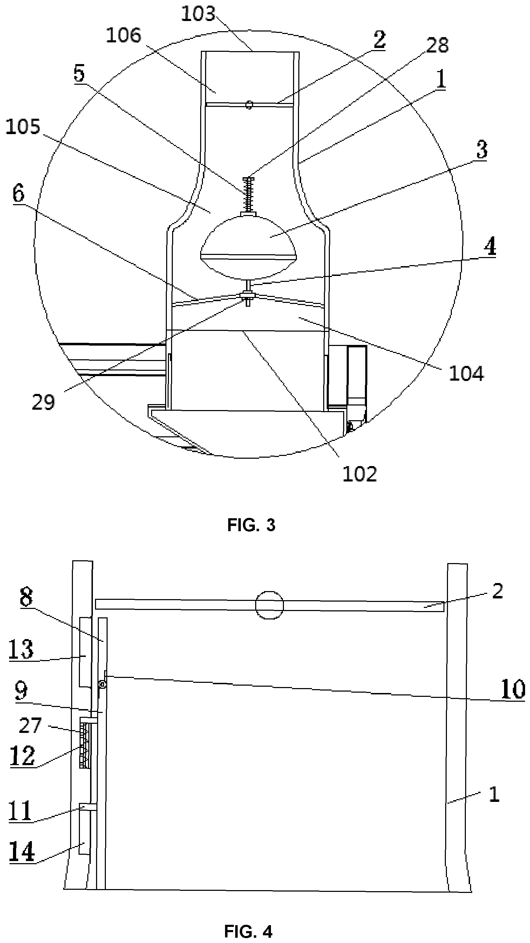

If an excessively large air pressure from the duct is applied to the closable venturi valve 7, the duct is completely closed, and the ball 3 is brought into tight contact with the inner wall of the valve body 1 so that the closable venturi valve 7 is completely closed and can't be recovered naturally, which causes the ball to get stuck. As a result, the control of a constant air volume will be affected. In another embodiment shown in FIG. 4, after the rotary blade 2 makes the ventilation duct be completely closed, an actuator operates to drive the rotation of the rotary blade 2. Optionally, the actuator may be an electric motor, wherein an output shaft of the electric motor is drivingly connected with a rotating shaft of the rotary blade 2, and the rotating shaft is rotatably mounted to the valve body 1. The electric motor is activated to drive the rotation of the rotating shaft and simultaneously drive the rotation of the rotary blade 2. The rotary blade 2 will exert a downward force on the upper pushing rod 8 therebelow while rotating, such that the upper pushing rod 8 and the lower pushing rod 9 are moved downward against the force from the compression spring 12. The lower pushing rod 9 is moved downward and then brought into contact with the ball 3 to exert a downward force thereon, such that the ball 3 is moved downward. After the rotary blade 2 is completely opened, the lower pushing rod 9 is reset by the action of the compression spring 12. The upper pushing rod 8 and the lower pushing rod 9 are connected by a torsion spring 10. When it is necessary to close the rotary blade 2, the rotary blade 2 is rotated and applies to the upper pushing rod 8 a force toward the direction of the groove 13, the upper pushing rod 8 is inclined towards the groove 13 against the torsion spring 8, and thus the rotary blade 2 can be rotated smoothly to a horizontal position where the valve body 1 is closed. After the rotary blade 2 passes over the upper pushing rod 8 and the rotary blade 2 completely seals the valve body 1, the upper pushing rod 8 is reset by the action of the torsion spring 10. Such a structural design can effectively avoid the situation where the ball 3 is stuck in the inner wall of the valve body 1 and ensure the smooth working of the closable venturi valve 7.

When the rotary blade 2 is combined with the venturi valve and the actuator outside the venturi valve is removed, the air volume is adjusted and controlled under different air pressures by only using the ball of the venturi valve, which is fixed to the axis by the fixing holder 6, and by using the spring 5 on the fixed rod 4. Moreover, the fixed rod 4 is fixed to the fixing holder 6, and the fixing holder 6 and the fixed rod 4 are fixedly connected with each other by a bolt 29. In this way, a flow rate through the valve is controlled without adjusting a movement of the fixed rod 4 in the axial direction, and a constant air volume control can be realized by the venturi valve. When such design is applied to a constant-air-volume fume cabinet, a constant air volume can be controlled by the entire valve at any time by controlling the rotary blade 2 without the use of an external actuator, which reduces the cost. Moreover, the volume of air through the venturi valve is set according to the size of the duct in the initial state and needs not to be controlled manually in the later stage. Therefore, constant-air-volume closable venturi valves with different air volumes may be set according to the required different air volumes to meet the actual requirements. The fixed rod 4 and the fixing holder 6 are fixedly connected with each other by a bolt 29. A ventilation volume through the closable venturi valve is set by adjusting a different position of mounting of the fixed rod 4 at the factory, and the length of a portion of the fixed rod 4 to which the ball 3 is mounted is adjusted to adjust a ventilation area between the ball 3 and the valve body 1 so as to set the ventilation volume.

This design is applicable to a constant-air-volume fume cabinet to achieve the control of a completely constant air volume. If the fume cabinet is accurately set at a certain required air volume at the factory, the venturi valve mounted in the fume cabinet is a constant-air-volume venturi valve prior to leaving the factory, and a constant air volume control is completely achieved during the subsequent working of the fume cabinet without continuous manual adjustment during the actual working. This design can achieve a stable ventilation volume inside the fume cabinet within an allowable range regardless of the magnitude of an exhaust air rate or air pressure exerted on the exhaust duct 17 by an external exhaust fan during working. The rotary blade 2 is controlled by an external actuator so as to be rapidly opened during working, so that air inside the fume cabinet is discharged therefrom. While an air pressure inside the ventilation duct is acting on the ball 3 inside the valve body 1, the compression spring 12 applies different forces to the ball 3. As the air volume in the exhaust duct 17 of the fume cabinet varies, the air pressure also varies accordingly. The ball 3 is adjusted at different positions by the compression spring 12 inside the venturi valve 7 to change the ventilation area between the ball 3 and the valve body 1 so as to achieve a simplified control of the ventilation volume inside the fume cabinet. When the speed of air in the external exhaust duct becomes larger, the compression spring 12 is contracted under the action of the air pressure, and the gap between the ball 3 and the valve body 1 becomes smaller. When the air speed becomes smaller, the ventilation area becomes larger. In this way, , the ventilation at a constant air volume without being affected by the air volume and air pressure from the exhaust fan is achieved by keeping the volume of the ventilating air passing through the closable venturi valve 7 always constant. In this design, a small constant air volume is achieved by the simple closable venturi valve 7 and the air-curtain-type fume cabinet instead of a complicated variable-air-volume exhaust system. The exhaust and supplementary air control systems are simple. Moreover, the fume cabinet achieves a complete fume discharging effect, and needs not to be operated manually during the actual working, the fume cabinet is fully automated and does not require any other control components, whereby an ingenious structure is designed with reduced cost. If the fume cabinet needs to operate at zero air volume or needs to be completely closed, it is only necessary to completely close the rotary blade 2 of the corresponding fume cabinet. The defect of the prior art venturi valve which cannot be completely closed is overcome.

The adjustment-free air-curtain-type fume cabinet according to the embodiment of the present disclosure achieves a smaller constant air volume during working instead of a complicated variable-air-volume exhaust system, involves simple exhaust and supplementary air control systems, is operating stably and reliably, and can be operated and maintained conveniently. Air is completely discharged from the fume cabinet without need of combining multiple components together for discharging air at a variable air volume.

Optionally, uprights 16 and a side plate (not shown in the figure) are mounted at the top of the tunnel of the cabinet body 15. The length direction of the uprights 16 is parallel to the height direction of the cabinet body 15. A window 18 reciprocatingly slidable in the length direction of the uprights 16 is mounted to the uprights 16. An air curtain machine 19 is mounted at the upper end of the window 18. An exhaust duct 17 and a supplementary air duct 24 are mounted at the upper end of the cabinet body 15. The exhaust duct 17 is connected with an exhaust box 20, wherein an upper end of the exhaust box is provided with an upper exhaust hole(s) 23 and a lower end of the exhaust box is provided with a lower exhaust hole(s) 21. An air deflector 22 is provided at a connection position between the supplementary air duct 24 and the cabinet body 15. The air deflector 22 is hinged to the cabinet body 15. Two air deflectors 22 may be provided and respectively disposed at the front and rear ends of the supplementary air duct 24, wherein the front and rear ends of the supplementary air duct 24 are corresponding to the front and rear ends of the cabinet body 15 respectively. The air deflectors 22 achieve the function of guiding a flow of supplementary air in the supplementary air duct 24. The exhaust box 20 is a cubic box. The lower exhaust hole(s) 21 of the exhaust box 20 enables the discharge of smoke (or fume) having a density greater than the density of air, and the upper exhaust hole(s) 23 enables the discharge of smoke (or fume) having a density smaller than the density of air. A flow control plate 26 is provided at a position on the exhaust box 20 where the upper exhaust hole(s) 23 is located. The flow control plate 26 is hinged to the exhaust box 20. Optionally, the upper exhaust hole(s) 23 and the lower exhaust hole(s) 21 are each elongated or circular holes.

An air deflector 22 is provided at the supplementary air duct 24 to guide a flow of supplementary air, and exhaust holes are provided at both the upper and lower ends of the exhaust box 20. A window 18 is provided at the front end of the cabinet body 15, and an air curtain machine 19 is provided on the window 18. Supplementary air from the supplementary air duct 24 enters the interior of the cabinet body 15 and then is guided by the air defector 22 to flow toward the front end of the cabinet body 15. Gases inside and outside the cabinet body 15 are isolated by the air curtain machine 19. The supplementary air introduced from the outside (outdoor) to the supplementary air duct 24 and entering the cabinet body 15 flows from top to bottom and forms a backflow at the bottom of the cabinet body 15, such that smoke having a density greater than the density of air descends and is discharged through the lower exhaust hole(s) 21 of the exhaust box 20, and smoke having a density smaller than the density of air flows upward and is discharged when it reaches the upper exhaust hole(s) 23 of the exhaust box 20, whereby the backflow of smoke is achieved inside the cabinet body 15, and complete discharge of the smoke is achieved. The flows of gases inside and outside the exhaust box 20 are blocked by an air wall (also called as an air curtain) formed by the air curtain machine 19, such that the gas inside the exhaust box 20 can be discharged from the exhaust duct 17 only with a small exhaust air rate, the exhaust fan is operated at low power, and thus energy consumption is reduced. Moreover, during operation of the fume cabinet according to the embodiment of the present disclosure, the supplementary air duct 24 is used to introduce air from the outside into the exhaust box 20, such that a small amount of air flows in the laboratory. In other words, it is unnecessary to frequently introduce air outside the laboratory into the laboratory. Thus, it is easy to maintain a constant temperature in the laboratory, thereby reducing energy consumed for maintaining the temperature of the laboratory. However, in the structural design of the prior art fume cabinet, during discharge of a gas from the exhaust box 20, air inside the laboratory needs to be continuously introduced into the exhaust box 20 and then discharged from the exhaust duct 17. In this process, it is necessary to continuously introduce air from the outside into the laboratory to meet the demand for air required in the laboratory. In this way, the air flow inside and outside the laboratory is greatly increased. In order to maintain a constant temperature required by the laboratory, the air outside the laboratory must be heated or cooled to reach the air temperature requirement in the laboratory before being introduced into the laboratory. The process of heating or cooling the air requires consumption of a lot of energy and thus increases the cost.

Optionally, the air deflector 22 provided inside the cabinet body 15 is hinged to the cabinet body 15. The air deflector 22 may be rotated at an angle as needed, and adjusted according to requirements of actual working. After the air deflector 22 is rotated to a desired angle, the air deflector 22 is positioned by fixation pins at both ends thereof and fixation grooves (or slots) in the cabinet body 15 to ensure the fixation of the air deflector 22 while facilitating manual adjustment. The flow control plate 26 located at the position of the upper exhaust hole(s) 23 is hinged to the exhaust box 20. The flow control plate 26 is rotatable so as to control the exhaust air rate through the upper exhaust hole(s), which facilitates the operation.

It should be noted that the angle of rotation of the air deflector 22 may be controlled by a motor, and the angle of rotation of the flow control plate 26 may be controlled by a motor.

The present disclosure further provides an exhaust system, including an exhaust fan and the adjustment-free air-curtain-type fume cabinet described above. The exhaust fan has an air inlet communicating with a port of the exhaust duct remote from the exhaust box. When the exhaust fan is activated, negative pressure is produced in the exhaust box, outdoor air is introduced via the supplementary air duct, and gas in the exhaust box is discharged from the exhaust duct.

### In one embodiment:

Referring to FIG. 1, a schematic structural view of an adjustment-free air-curtain-type fume cabinet when viewed from a first perspective is shown. The adjustment-free air-curtain-type fume cabinet includes a cabinet body 15, an exhaust box 20, uprights 16, a window 18, an air curtain machine 19, an exhaust duct 17, a supplementary air duct 24, a closable venturi valve 7, an air deflector 22, and a flow control plate 26. The exhaust box 20 is mounted on the top of the cabinet body 15. The uprights 16 are mounted on the top of the cabinet body 15. The uprights 16 are disposed perpendicular to the top surface of the cabinet body 15. A rectangular frame structure is surrounded by the uprights 16. The exhaust box 20 is located in the region surrounded by the uprights 16. A rectangular opening 25 is provided in the front side of the exhaust box 20, exhaust holes in the form of an elongated or circular hole are provided in the rear side of the exhaust box 20, wherein the exhaust holes are provided opposite to the opening 25. The exhaust holes include upper exhaust holes 23 and lower exhaust holes 21, wherein the upper exhaust holes 23 and the lower exhaust holes 21 are arranged at intervals along the height direction of the cabinet body 15, the upper exhaust holes 23 are adjacent to the top of the exhaust box 20, and the lower exhaust holes 21 are adjacent to the bottom of the exhaust box 20. A flow control plate 26 is mounted above the upper exhaust holes 23. The flow control plate 26 has a guide side 261 and a mounting side 262. The mounting side 262 is mounted to the inner side wall of the exhaust box 20. A distance between the flow control plate 26 and the inner side wall gradually decreases from the guide side 261 to the mounting side 262 along the height direction of the exhaust box 20. An experimenter has access to the exhaust box 20 through the opening 25 to perform an experimental operation. The window 18 is located on the side where the opening 25 of the exhaust box 20 is located. The window 18 is slidably mounted to the uprights 16. The window 18 is reciprocatingly slidable in the height direction of the upright 16. The air curtain machine 19 is mounted to the window 18. An air outlet of the air curtain machine 19 faces the top of the cabinet body 15. When the air curtain machine 19 is working, an air flow is discharged from the air outlet to form an air wall at the opening 25, so that the air inside and outside the cabinet body 15 is isolated from each other by the air wall. By adjusting the height of the window 18, the size of the opening 25 can be changed so as to adjust the operating space, and at the same time the height of the air wall can be changed to enable the air wall to always seal the opening 25, such that air on both sides of the opening 25 cannot freely flow through the air wall. The exhaust duct 17 is located at the rear side of the exhaust box 20. The exhaust duct 17 includes a first duct section 171 and a second duct section 172. The first duct section 171 communicates with the second duct section 172. The first duct section 171 is mounted on the outer side wall of the exhaust box 20. Both the upper exhaust hole 23 and the lower exhaust hole 21 communicate with the first duct section 171. The projection of the second duct section 172 onto the top of the exhaust box 20 along the length direction of the first duct section 171 is at the top of the exhaust box 20. The closable venturi valve 7 is mounted on the second duct section 172. A gas outlet of the closable venturi valve 7 is configured to communicate with the exhaust fan so that the gas in the exhaust box 20 passes through the exhaust duct and the closable venturi valve 7 and then is discharged to the outside the laboratory. One end of the supplementary air duct 24 is located at the top of the exhaust box 20 and communicates with the exhaust box 20, and the other end of the supplementary air duct 24 extends out of the laboratory. Two air deflectors 22 are mounted to the top of the exhaust box 20. The two air deflectors 22 are disposed obliquely. The two air deflectors 22 are arranged at an interval along a direction perpendicular to the front side of the exhaust box 20. The supplementary air duct 24 communicates with the exhaust box 20 at a position between the two air deflectors 22. The air deflectors 22 are configured such that an airflow entering the exhaust box 20 from the supplementary air duct 24 flows toward the side where the opening 25 is located.

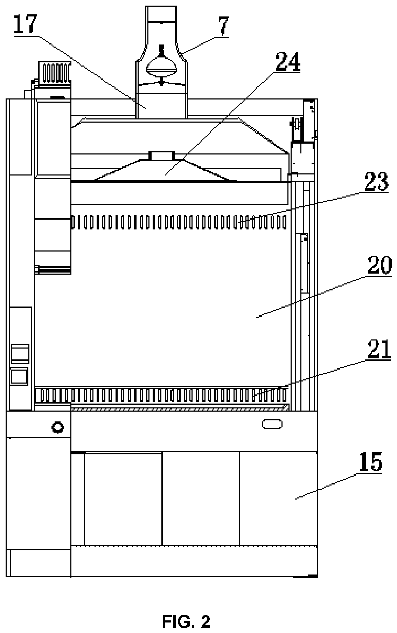

Referring to FIG. 2, a schematic structural view of the adjustment-free air-curtain-type fume cabinet when viewed from a second perspective is shown. The adjustment-free air-curtain-type fume cabinet includes a cabinet body 15, an exhaust box 20, a supplementary air duct 24, an exhaust duct 17, and a closable venturi valve 7. The exhaust box 20 is provided with upper exhaust holes 23 and lower exhaust holes 21. The upper exhaust holes 23 are close to the top of the exhaust box 20, a plurality of upper exhaust holes 23 are provided, and the plurality of upper exhaust holes 23 are arranged at intervals along the width direction of the exhaust box 20. The lower exhaust holes 21 are close to the bottom of the exhaust box 20, a plurality of lower exhaust holes 21 are provided, and the plurality of lower exhaust holes 21 are arranged at intervals along the width direction of the exhaust box 20. One end of the supplementary air duct 24 is located in the middle of the top plate of the exhaust box 20, and the supplementary air duct 24 communicates with the exhaust box 20. One end of the exhaust duct 17 communicates with the exhaust box 20, and the closable venturi valve 7 is mounted on the exhaust duct 17.

Referring to FIG. 3, a partially enlarged schematic view of FIG. 1 is shown. The closable venturi valve 7 includes a valve body 1, a rotary blade 2, a ball 3, a fixing holder 6, a fixed rod 4, and an elastic member. The valve body 1 has a flow channel 101. The flow channel 101 has a circular cross-sectional shape. The flow channel 101 includes a first flow section 104, a second flow section 105, and a third flow section 106 sequentially communicated with one another. The diameter of the first flow section 104 is larger than the diameter of the third flow section 106. The second flow section 105 is a gradually varying section, and the second flow section 105 has a diameter gradually decreasing from its end connected with the first flow section 104 to its end connected with the second flow section 105. The two ends of the flow channel 101 in its length direction are an inlet port 102 and an outlet port 103, respectively. The inlet port 102 communicates with an end of the exhaust duct 17 remote from the exhaust box 20. The rotary blade 2 is located in the third flow section 106. The rotary blade 2 is rotatably mounted in the valve body 1 and is adjacent to the outlet port 103. The flow channel 101 can be opened or closed when the rotary blade 2 is rotated. The fixing holder 6 is mounted in the valve body 1 and located in the first flow section 104. The fixed rod 4 is mounted to the fixing holder 6 by a bolt 29. The ball 3 is slidably mounted on the fixed rod 4. One end of the elastic member is positionally limited by the fixed rod 4, and the other end of the elastic member is positionally limited by the ball 3. The elastic member allows the ball 3 to have a tendency to slide from the outlet port 103 to the inlet port 102 along the direction of the central axis of the valve body 1. Optionally, the elastic member is a spring 5. The spring 5 is sleeved outside the fixed rod 4. A limit protrusion 28 is provided at an end of the fixed rod 4 remote from the fixing holder 6. One end of the spring 5 abuts against the limit protrusion 28 and is positionally limited by the limit protrusion 28, and the other end of the spring 5 abuts against the ball 3.

Referring to FIG. 4, a schematic structural view of the rotary blade 2, the valve body 1, and the pushing device is shown. The rotary blade 2 is located in the valve body 1, and the rotary blade 2 is rotatably mounted to the valve body 1. The pushing device includes an upper pushing rod 8, a lower pushing rod 9, a torsion spring 10, and an elastic reset member. The upper pushing rod 8 and the lower pushing rod 9 are connected with each other by the torsion spring 10. The upper pushing rod 8 and the lower pushing rod 9 are located between the ball 3 and the rotary blade 2. Slide grooves 14 and a groove 13 are provided in the inner wall of the valve body 1, wherein the groove 13 is close to the upper pushing rod 8, and the slide grooves 14 are close to the lower pushing rod 9. Two slide grooves 14 are provided, and the two slide grooves 14 are arranged at an interval along the central axis of the valve body 1. Two locking plates 11 are mounted on the lower pushing rod 9. One side of each locking plate 11 is mounted on the lower pushing rod 9, and the other side of the locking plate 11 is slidably provided in the corresponding slide groove 14. A positioning column 27 is mounted in the upper slide groove 14. The positioning column 27 is parallel to the central axis of the valve body 1. The elastic reset member is mounted on the positioning column 27. The locking plate 11 is slidably sleeved outside the positioning column 27. The elastic reset member is located between the locking plate 11 and a side wall of the slide groove 14 remote from the rotary blade 2. The elastic rest member allows the lower pushing rod 9 to have a tendency to slide towards the rotary blade 2 in the direction of the central axis of the valve body 1. The rotary blade 2 rotates to drive the upper pushing rod 8 to rotate relative to the lower pushing rod 9 and simultaneously drive the lower pushing rod 9 to slide relative to the valve body 1 so that the lower pushing rod 9 forces the ball 3 to move toward the inlet port 102. Optionally, the elastic rest member may be a compression spring 12.

The above specific embodiments are only specific examples of the present disclosure. The claimed scope of the present disclosure includes, but is not limited to, the product forms and styles of the above specific embodiments. Any appropriate variations or modifications complying with the present disclosure and made by those of ordinary skill in the art should fall within the scope of the present disclosure as claimed. The invention is delimited by the appended claims.

### Industrial Applicability:

In summary, the present disclosure provides an adjustment-free air-curtain-type fume cabinet and an exhaust system for saving energy.

## Claims

1. An adjustment-free air-curtain-type fume cabinet, comprising a cabinet body (15), an exhaust box (20), a window (18), an air curtain machine (19), a supplementary air duct (24), and an exhaust duct (17), wherein the exhaust box (20) is mounted on the cabinet body (15), the exhaust box (20) is provided with an opening (25), and both the exhaust duct (17) and the supplementary air duct (24) communicate with the exhaust box (20); the window (18) is slidably mounted to the cabinet body (15), and the window (18) is reciprocatingly slidable relative to the cabinet body (15) in a height direction of the cabinet body (15) to change the height of the opening; the air curtain machine (19) is mounted to the cabinet body (15), and the air curtain machine (19) is configured to form an air wall at the opening (25) to prevent an exchange of airflows inside and outside the exhaust box (20) at the opening (25); and the closable venturi valve (7) is mounted on the exhaust duct (17), **characterized in that** the adjustment-free air-curtain-type fume cabinet comprises a closable venturi valve (7), wherein the closable venturi valve (7) comprises a valve body (1), a rotary blade (2), a ball (3), a fixing holder (6), a fixed rod (4), and an elastic member, wherein the valve body (1) has a flow channel (101), two ends of the flow channel (101) in its length direction are an inlet port (102) and an outlet port (103) respectively, the inlet port (102) communicates with an end of the exhaust duct (17) remote from the exhaust box (20), the rotary blade (2) is rotatably mounted in the valve body (1) and is adjacent to the outlet port (103), and the flow channel (101) is configured to be opened or closed when the rotary blade (2) is rotated; the fixing holder (6) is mounted in the valve body (1), the fixed rod (4) is mounted to the fixing holder (6), the ball (3) is slidably mounted on the fixed rod (4), position of one end of the elastic member is limited by the fixed rod (4), position of the other end of the elastic member is limited by the ball (3), and the elastic member allows the ball (3) to have a tendency of sliding from the outlet port (103) to the inlet port (102) in a direction of a central axis of the valve body (1), wherein the adjustment-free air-curtain-type fume cabinet further comprises a pushing device located in the flow channel (101), wherein the pushing device comprises an upper pushing rod (8), a lower pushing rod (9), a torsion spring (10), and an elastic rest member, the upper pushing rod (8) and the lower pushing rod (9) are connected with each other by the torsion spring (10), the upper pushing rod (8) and the lower pushing rod (9) are located between the ball (3) and the rotary blade (2), the lower pushing rod (9) is slidably disposed on an inner wall of the valve body (1), the lower pushing rod (9) and the valve body (1) are connected by the elastic reset member, the elastic reset member allows the lower pushing rod (9) to have a tendency of sliding close to the rotary blade (2) in the direction of the central axis of the valve body (1), and the rotary blade (2) rotates to drive the upper pushing rod (8) to rotate relative to the lower pushing rod (9) and simultaneously drive the lower pushing rod (9) to slide relative to the valve body (1) so that the lower pushing rod (9) forces the ball (3) to move toward the inlet port (102).

2. The adjustment-free air-curtain-type fume cabinet according to claim 1, **characterized in that** the supplementary air duct (24) communicates with the exhaust box (20) at a top of the exhaust box (20), and the exhaust duct (17) communicates with the exhaust box (20) at a side of the exhaust box (20).

3. The adjustment-free air-curtain-type fume cabinet according to claim 1 or 2, **characterized in that** exhaust holes are provided at a side of the exhaust box (20), a port of the exhaust duct (17) is hermetically connected with the exhaust holes, and the exhaust holes are provided opposite to the opening (25).

4. The adjustment-free air-curtain-type fume cabinet according to claim 3, **characterized in that** the exhaust holes includes upper exhaust holes (23) and lower exhaust holes (21), wherein the upper exhaust holes (23) and the lower exhaust holes (21) are arranged at intervals along the height direction of the cabinet body (15), the upper exhaust holes (23) are adjacent to the top of the exhaust box (20), and the lower exhaust holes (21) are adjacent to the bottom of the exhaust box (20).

5. The adjustment-free air-curtain-type fume cabinet according to any one of claims 1 to 4, **characterized in that** the air curtain machine (19) is mounted on the window (18) and is slidable in synchronization with the window (18).

6. The adjustment-free air-curtain-type fume cabinet according to any one of claims 3 to 5, **characterized in that** a flow control plate (26) is mounted above the exhaust hole, wherein the flow control plate (26) has a guide side (261) and a mounting side (262), the mounting side (262) is mounted to an inner side wall of the exhaust box (20), and a distance between the flow control plate (26) and the inner side wall gradually decreases from the guide side (261) to the mounting side (262) along the height direction of the exhaust box (20).

7. The adjustment-free air-curtain-type fume cabinet according to any one of claims 3 to 6, **characterized by** further comprising an air deflector (22), wherein the air deflector (22) is mounted at the top of the exhaust box (20), and the air deflector (22) is configured such that an airflow entering the exhaust box (20) from the supplementary air duct (24) flows toward a side where the opening (25) is located.

8. The adjustment-free air-curtain-type fume cabinet according to claim 4, **characterized in that** the exhaust duct (17) comprises a first duct section (171) and a second duct section (172), wherein the first duct section (171) communicates with the second duct section (172), the first duct section (171) is mounted to an outer side wall of the exhaust box (20), and both the upper exhaust hole (23) and the lower exhaust hole (21) communicate with the first duct section (171); the projecting portion, which is formed by the second duct section (172) being projected onto the top of the exhaust box (20) along a length direction of the first duct section (171), is located at the top of the exhaust box (20), and the closable venturi valve (7) is mounted on the second duct section (172).

9. The adjustment-free air-curtain-type fume cabinet according to any one of claims 1 to 8, **characterized by** further comprising uprights (16), wherein the uprights (16) are disposed perpendicular to the cabinet body (15), the exhaust box (20) is located in a region surrounded by the uprights (16), and the window (18) is slidably mounted to the uprights (16).

10. The adjustment-free air-curtain-type fume cabinet according to claim 1, **characterized in that** the fixed rod (4) is screwed to the fixing holder (6).

11. The adjustment-free air-curtain-type fume cabinet according to claim 1, **characterized in that** a pushing device configured to push the ball (3) is provided on an inner wall of the valve body (1), wherein the pushing device comprises an upper pushing rod (8) and a lower pushing rod (9), the upper pushing rod (8) and the lower pushing rod (9) are connected with each other by a torsion spring (10), the lower pushing rod (9) is movably disposed in a slide groove (14) provided in the inner wall of the valve body (1) by a locking plate (11), the upper pushing rod (8) is located below the rotary blade (2), and the lower pushing rod (9) is provided above the ball (3);
the upper pushing rod (8) is located below the rotary blade (2) when the rotary blade (2) is in a state where the closable venturi valve is closed, a groove (13) is provided at a position on the inner wall of the valve body (1) near the upper pushing rod (8), and the upper pushing rod (8) is configured to be inclined toward the direction of the groove (13) and reset by the torsion spring (10).

12. The adjustment-free air-curtain-type fume cabinet according to claim 11, **characterized in that** the locking plate (11) is provided inside the slide groove (14), a compression spring (12) combined with the locking plate (11) is provided inside the slide groove (14), and the compression spring (12) serves a function of resetting the lower pushing rod (9) and the upper pushing rod (8).

13. The adjustment-free air-curtain-type fume cabinet according to claim 11 or 12, **characterized in that** two locking plates (11) are provided on the lower pushing rod (9), wherein the two locking plates (11) are arranged at an interval along a height direction of the cabinet body (15), and the two locking plates (11) are both movably provided in the slide groove (14); and a bottommost end of the lower pushing rod (9) is provided with rounded corners.

## Patentansprüche

1. Abzugskasten mit einstelllosem Luftvorhang, umfassend einen Kastenkörper (15), eine Abluftbox (20), ein Fenster (18), eine Luftvorhangmaschine (19), eine zusätzliche Luftleitung (24) und eine Abluftleitung (17),
wobei die Abluftbox (20) an dem Kastenkörper (15) montiert ist, die Abluftbox (20) mit einer Öffnung (25) bereitgestellt ist und sowohl die Abluftleitung (17) als auch die zusätzliche Luftleitung (24) mit der Abluftbox (20) kommunizieren; das Fenster (18) gleitbar an dem Kastenkörper (15) montiert ist und das Fenster (18) relativ zu dem Kastenkörper (15) in einer Höhenrichtung des Kastenkörpers (15) hin- und hergleitbar ist, um die Höhe der Öffnung zu ändern; die Luftvorhangmaschine (19) an dem Kastenkörper (15) montiert ist und die Luftvorhangmaschine (19) dazu konfiguriert ist, eine Luftwand an der Öffnung (25) zu bilden, um einen Austausch von Luftströmen innerhalb und außerhalb der Abluftbox (20) an der Öffnung (25) zu verhindern; und das schließbare Venturi-Ventil (7) an der Abluftleitung (17) montiert ist, **dadurch gekennzeichnet, dass** der Abzugskasten mit einstelllosem Luftvorhang ein schließbares Venturi-Ventil (7) umfasst, wobei das schließbare Venturi-Ventil (7) einen Ventilkörper (1), ein Drehblatt (2), eine Kugel (3), einen Befestigungshalter (6), eine feste Stange (4) und ein elastisches Element umfasst, wobei der Ventilkörper (1) einen Strömungskanal aufweist (101), zwei Enden des Strömungskanals (101) in seiner Längenrichtung ein Einlassanschluss (102) bzw. ein Auslassanschluss (103) sind, der Einlassanschluss (102) mit einem Ende der Abluftleitung (17), das von der Abluftbox (20) entfernt ist, kommuniziert, das Drehblatt (2) drehbar in dem Ventilkörper (1) montiert ist und zu dem Auslassanschluss (103) benachbart ist und der Strömungskanal (101) dazu konfiguriert ist, geöffnet oder geschlossen zu werden, wenn das Drehblatt (2) gedreht wird; der Befestigungshalter (6) in dem Ventilkörper (1) montiert ist, die feste Stange (4) an dem Befestigungshalter (6) montiert ist, die Kugel (3) gleitbar an der festen Stange (4) montiert ist, die Position eines Endes des elastischen Elements durch die feste Stange (4) begrenzt ist, die Position des anderen Endes des elastischen Elements durch die Kugel (3) begrenzt ist und das elastische Element ermöglicht, dass die Kugel (3) eine Tendenz aufweist, in einer Richtung einer Mittelachse des Ventilkörpers (1) von dem Auslassanschluss (103) zu dem Einlassanschluss (102) zu gleiten, wobei der Abzugskasten mit einstelllosem Luftvorhang ferner eine Schiebevorrichtung umfasst, die sich in dem Strömungskanal (101) befindet, wobei die Schiebevorrichtung eine obere Schiebestange (8), eine untere Schiebestange (9), eine Torsionsfeder (10) und ein elastisches Rücksetzelement umfasst, die obere Schiebestange (8) und die untere Schiebestange (9) durch die Torsionsfeder (10) miteinander verbunden sind, sich die obere Schiebestange (8) und die untere Schiebestange (9) zwischen der Kugel (3) und dem Drehblatt (2) befinden, die untere Schiebestange (9) gleitbar an einer inneren Wand des Ventilkörpers (1) vorgesehen ist, die untere Schiebestange (9) und der Ventilkörper (1) durch das elastische Rücksetzelement verbunden sind, das elastische Rücksetzelement ermöglicht, dass die untere Schiebestange (9) eine Tendenz aufweist, in der Richtung der Mittelachse des Ventilkörpers (1) nahe zu dem Drehblatt (2) zu gleiten, und sich das Drehblatt (2) dreht, um die obere Schiebestange (8) anzutreiben, um sich relativ zu der unteren Schiebestange (9) zu drehen, und gleichzeitig die untere Schiebestange (9) anzutreiben, um relativ zu dem Ventilkörper (1) zu gleiten, sodass die untere Schiebestange (9) die Kugel (3) zwingt, sich in Richtung des Einlassanschlusses (102) zu bewegen.

2. Abzugskasten mit einstelllosem Luftvorhang nach Anspruch 1, **dadurch gekennzeichnet, dass** die zusätzliche Luftleitung (24) mit der Abluftbox (20) an einer Oberseite der Abluftbox (20) kommuniziert und die Abluftleitung (17) mit der Abluftbox (20) an einer Seite der Abluftbox (20) kommuniziert.

3. Abzugskasten mit einstelllosem Luftvorhang nach Anspruch 1 oder 2, **dadurch gekennzeichnet, dass** Abluftlöcher an einer Seite der Abluftbox (20) bereitgestellt sind, ein Anschluss der Abluftleitung (17) hermetisch mit den Abluftlöchern verbunden ist und die Abluftlöcher gegenüber der Öffnung (25) bereitgestellt sind.

4. Abzugskasten mit einstelllosem Luftvorhang nach Anspruch 3, **dadurch gekennzeichnet, dass** die Abluftlöcher obere Abluftlöcher (23) und untere Abluftlöcher (21) beinhalten, wobei die oberen Abluftlöcher (23) und die unteren Abluftlöcher (21) in Intervallen entlang der Höhenrichtung des Kastenkörpers (15) angeordnet sind, die oberen Abluftlöcher (23) zu der Oberseite der Abluftbox (20) benachbart sind und die unteren Abluftlöcher (21) zu der Unterseite der Abluftbox (20) benachbart sind.

5. Abzugskasten mit einstelllosem Luftvorhang nach einem der Ansprüche 1 bis 4, **dadurch gekennzeichnet, dass** die Luftvorhangmaschine (19) an dem Fenster (18) montiert ist und synchron mit dem Fenster (18) gleitbar ist.

6. Abzugskasten mit einstelllosem Luftvorhang nach einem der Ansprüche 3 bis 5, **dadurch gekennzeichnet, dass** eine Strömungssteuerplatte (26) über dem Abluftloch montiert ist, wobei die Strömungssteuerplatte (26) eine Führungsseite (261) und eine Montageseite (262) aufweist, die Montageseite (262) an einer inneren Seitenwand der Abluftbox (20) montiert ist und ein Abstand zwischen der Strömungssteuerplatte (26) und der inneren Seitenwand von der Führungsseite (261) zu der Montageseite (262) entlang der Höhenrichtung der Abluftbox (20) schrittweise abnimmt.

7. Abzugskasten mit einstelllosem Luftvorhang nach einem der Ansprüche 3 bis 6, **dadurch gekennzeichnet, dass** er ferner eine Luftleiteinrichtung (22) umfasst, wobei die Luftleiteinrichtung (22) an der Oberseite der Abluftbox (20) montiert ist und die Luftleiteinrichtung (22) derart konfiguriert ist, dass ein Luftstrom, der aus der zusätzlichen Luftleitung (24) in die Abluftbox (20) eintritt, in Richtung einer Seite strömt, wo sich die Öffnung (25) befindet.

8. Abzugskasten mit einstelllosem Luftvorhang nach Anspruch 4, **dadurch gekennzeichnet, dass** die Abluftleitung (17) einen ersten Leitungsabschnitt (171) und einen zweiten Leitungsabschnitt (172) umfasst, wobei der erste Leitungsabschnitt (171) mit dem zweiten Leitungsabschnitt (172) kommuniziert, der erste Leitungsabschnitt (171) an einer äußeren Seitenwand der Abluftbox (20) montiert ist und sowohl das obere Abluftloch (23) als auch das untere Abluftloch (21) mit dem ersten Leitungsabschnitt (171) kommunizieren; sich der vorstehende Teil, der dadurch gebildet wird, dass der zweite Leitungsabschnitt (172) entlang einer Längenrichtung des ersten Leitungsabschnitts (171) auf die Oberseite der Abluftbox (20) vorsteht, an der Oberseite der Abluftbox (20) befindet und das schließbare Venturi-Ventil (7) an dem zweiten Leitungsabschnitt (172) montiert ist.

9. Abzugskasten mit einstelllosem Luftvorhang nach einem der Ansprüche 1 bis 8, **dadurch gekennzeichnet, dass** er ferner aufrechte Elemente (16) umfasst, wobei die aufrechten Elemente (16) senkrecht zu dem Kastenkörper (15) vorgesehen sind, sich die Abluftbox (20) in einem Bereich befindet, der von den aufrechten Elementen (16) umgeben ist, und das Fenster (18) gleitbar an den aufrechten Elementen (16) montiert ist.

10. Abzugskasten mit einstelllosem Luftvorhang nach Anspruch 1, **dadurch gekennzeichnet, dass** die feste Stange (4) an den Befestigungshalter (6) geschraubt ist.

11. Abzugskasten mit einstelllosem Luftvorhang nach Anspruch 1, **dadurch gekennzeichnet, dass** eine Schiebevorrichtung, die dazu konfiguriert ist, die Kugel (3) zu schieben, an einer inneren Wand des Ventilkörpers (1) breitgestellt ist, wobei die Schiebevorrichtung eine obere Schiebestange (8) und eine untere Schiebestange (9) umfasst, die obere Schiebestange (8) und die untere Schiebestange (9) durch eine Torsionsfeder (10) miteinander verbunden sind, die untere Schiebestange (9) bewegbar in einer Gleitnut (14) vorgesehen ist, die in der inneren Wand des Ventilkörpers (1) durch eine Sperrplatte (11) bereitgestellt ist, sich die obere Schiebestange (8) unter dem Drehblatt (2) befindet und die untere Schiebestange (9) über der Kugel (3) bereitgestellt ist;
sich die obere Schiebestange (8) unter dem Drehblatt (2) befindet, wenn sich das Drehblatt (2) in einem Zustand befindet, in dem das schließbare Venturi-Ventil geschlossen ist, eine Nut (13) in einer Position an der inneren Wand des Ventilkörpers (1) nahe der oberen Schiebestange (8) bereitgestellt ist und die obere Schiebestange (8) dazu konfiguriert ist, in Richtung der Nut (13) geneigt zu sein und durch die Torsionsfeder (10) zurückgesetzt zu werden.

12. Abzugskasten mit einstelllosem Luftvorhang nach Anspruch 11, **dadurch gekennzeichnet, dass** die Sperrplatte (11) innerhalb der Gleitnut (14) bereitgestellt ist, eine mit der Sperrplatte (11) kombinierte Druckfeder (12) innerhalb der Gleitnut (14) bereitgestellt ist und die Druckfeder (12) einer Funktion des Rücksetzens der unteren Schiebestange (9) und der oberen Schiebestange (8) dient.

13. Abzugskasten mit einstelllosem Luftvorhang nach Anspruch 11 oder 12, **dadurch gekennzeichnet, dass** zwei Sperrplatten (11) an der unteren Schiebestange (9) bereitgestellt sind, wobei die zwei Sperrplatten (11) in einem Intervall entlang einer Höhenrichtung des Kastenkörpers (15) angeordnet sind und die zwei Sperrplatten (11) beide bewegbar in der Gleitnut (14) bereitgestellt sind; und ein unterstes Ende der unteren Schiebestange (9) mit abgerundeten Ecken bereitgestellt ist.

## Revendications

1. Armoire à fumée de type rideau d'air sans réglage, comprenant un corps d'armoire (15), une boîte d'échappement (20), une fenêtre (18), une machine à rideau d'air (19), un conduit d'air supplémentaire (24) et un conduit d'échappement (17),
dans laquelle la boîte d'échappement (20) est montée sur le corps d'armoire (15), la boîte d'échappement (20) est pourvue d'une ouverture (25) et à la fois le conduit d'échappement (17) et le conduit d'air supplémentaire (24) communiquent avec la boîte d'échappement (20) ; la fenêtre (18) est montée de manière coulissante sur le corps d'armoire (15), et la fenêtre (18) peut coulisser en va-et-vient par rapport au corps d'armoire (15) dans une direction de hauteur du corps d'armoire (15) pour modifier la hauteur de l'ouverture ; la machine à rideau d'air (19) est montée sur le corps d'armoire (15), et la machine à rideau d'air (19) est configurée pour former une paroi d'air au niveau de l'ouverture (25) pour éviter un échange de flux d'air à l'intérieur et à l'extérieur de la boîte d'échappement (20) au niveau de l'ouverture (25) ; et la soupape à venturi pouvant être fermée (7) est montée sur le conduit d'échappement (17), **caractérisée en ce que** l'armoire à fumée de type rideau d'air sans réglage comprend une soupape à venturi pouvant être fermée (7), dans laquelle la soupape à venturi pouvant être fermée (7) comprend un corps de soupape (1), une lame rotative (2), une bille (3), un support de fixation (6), une tige fixe (4) et un élément élastique, dans laquelle le corps de soupape (1) a un canal d'écoulement (101), deux extrémités du canal d'écoulement (101) dans sa direction longitudinale sont respectivement un orifice d'entrée (102) et un orifice de sortie (103), l'orifice d'entrée (102) communique avec une extrémité du conduit d'échappement (17) distante de la boîte d'échappement (20), la lame rotative (2) est montée en rotation dans le corps de soupape (1) et est adjacente à l'orifice de sortie (103), et le canal d'écoulement (101) est configuré pour être ouvert ou fermé lorsque la lame rotative (2) tourne ; le support de fixation (6) est monté dans le corps de soupape (1), la tige fixe (4) est montée sur le support de fixation (6), la bille (3) est montée de manière coulissante sur la tige fixe (4), la position d'une extrémité de l'élément élastique est limitée par la tige fixe (4), la position de l'autre extrémité de l'élément élastique est limitée par la bille (3), et l'élément élastique permet à la bille (3) d'avoir une tendance de coulissement de l'orifice de sortie (103) à l'orifice d'entrée (102) dans une direction d'un axe central du corps de soupape (1), dans laquelle l'armoire à fumée de type rideau d'air sans réglage comprend en outre un dispositif de poussée situé dans le canal d'écoulement (101), dans laquelle le dispositif de poussée comprend une tige de poussée supérieure (8), une tige de poussée inférieure (9), un ressort de torsion (10) et un élément d'appui élastique, la tige de poussée supérieure (8) et la tige de poussée inférieure (9) sont connectées l'une à l'autre par le ressort de torsion (10), la tige de poussée supérieure (8) et la tige de poussée inférieure (9) sont situées entre la bille (3) et la lame rotative (2), la tige de poussée inférieure (9) est disposée de manière coulissante sur une paroi interne du corps de soupape (1), la tige de poussée inférieure (9) et le corps de soupape (1) sont connectés par l'élément de rappel élastique, l'élément de rappel élastique permet à la tige de poussée inférieure (9) d'avoir une tendance de coulissement à proximité de la lame rotative (2) dans la direction de l'axe central du corps de soupape (1), et la lame rotative (2) tourne pour entraîner la tige de poussée supérieure (8) pour tourner par rapport à la tige de poussée inférieure (9) et entraîner simultanément la tige de poussée inférieure (9) pour coulisser par rapport au corps de soupape (1) de sorte que la tige de poussée inférieure (9) force la bille (3) à se déplacer vers l'orifice d'entrée (102) .

2. Armoire à fumée de type rideau d'air sans réglage selon la revendication 1, **caractérisée en ce que** le conduit d'air supplémentaire (24) communique avec la boîte d'échappement (20) en haut de la boîte d'échappement (20), et le conduit d'échappement (17) communique avec la boîte d'échappement (20) sur un côté de la boîte d'échappement (20).

3. Armoire à fumée de type rideau d'air sans réglage selon la revendication 1 ou 2, **caractérisée en ce que** des trous d'évacuation sont prévus sur un côté de la boîte d'échappement (20), un orifice du conduit d'échappement (17) est connecté hermétiquement aux trous d'échappement, et les trous d'échappement sont prévus à l'opposé de l'ouverture (25).

4. Armoire à fumée de type rideau d'air sans réglage selon la revendication 3, **caractérisée en ce que** les orifices d'échappement comportent des orifices d'échappement supérieurs (23) et des orifices d'échappement inférieurs (21), dans laquelle les orifices d'échappement supérieurs (23) et les orifices d'échappement inférieurs (21) sont agencés à certains intervalles le long de la direction de la hauteur du corps d'armoire (15), les trous d'échappement supérieurs (23) sont adjacents en haut de la boîte d'échappement (20) et les trous d'échappement inférieurs (21) sont adjacents au fond de la boîte d'échappement (20).

5. Armoire à fumée de type rideau d'air sans réglage selon l'une quelconque des revendications 1 à 4, **caractérisée en ce que** la machine à rideau d'air (19) est montée sur la fenêtre (18) et peut coulisser en synchronisation avec la fenêtre (18).

6. Armoire à fumée de type rideau d'air sans réglage selon l'une quelconque des revendications 3 à 5, **caractérisée en ce qu'**une plaque de régulation de débit (26) est montée au-dessus du trou d'échappement, dans laquelle la plaque de régulation de débit (26) a un côté de guidage (261) et un côté de montage (262), le côté de montage (262) est monté sur une paroi latérale interne de la boîte d'échappement (20), et une distance entre la plaque de régulation de débit (26) et la paroi latérale interne diminue progressivement du côté de guidage (261) au côté de montage (262) le long de la direction de hauteur de la boîte d'échappement (20).

7. Armoire à fumée de type rideau d'air sans réglage selon l'une quelconque des revendications 3 à 6, **caractérisée en ce qu'**elle comprend en outre un déflecteur d'air (22), dans laquelle le déflecteur d'air (22) est monté en haut de la boîte d'échappement (20), et le déflecteur d'air (22) est configuré de sorte qu'un flux d'air entrant dans la boîte d'échappement (20) depuis le conduit d'air supplémentaire (24) s'écoule vers un côté où se trouve l'ouverture (25).

8. Armoire à fumée de type rideau d'air sans réglage selon la revendication 4, **caractérisée en ce que** le conduit d'évacuation (17) comprend une première section de conduit (171) et une seconde section de conduit (172), dans laquelle la première section de conduit (171) communique avec la seconde section de conduit (172), la première section de conduit (171) est montée sur une paroi latérale externe de la boîte d'échappement (20), et à la fois le trou d'échappement supérieur (23) et le trou d'échappement inférieur (21) communiquent avec la première section de conduit (171) ; la partie saillante, qui est formée par la seconde section de conduit (172) projetée sur le dessus de la boîte d'échappement (20) le long d'une direction longitudinale de la première section de conduit (171), est située au sommet de la boîte d'échappement (20), et la soupape à venturi pouvant être fermée (7) est montée sur la seconde section de conduit (172).

9. Armoire à fumée de type rideau d'air sans réglage selon l'une quelconque des revendications 1 à 8, **caractérisée en ce qu'**elle comprend en outre des montants (16), dans laquelle les montants (16) sont disposés perpendiculairement au corps d'armoire (15), la boîte d'échappement (20) est située dans une région entourée par les montants (16), et la fenêtre (18) est montée de manière coulissante sur les montants (16).

10. Armoire à fumée de type rideau d'air sans réglage selon la revendication 1, **caractérisée en ce que** la tige fixe (4) est vissée au support de fixation (6).

11. Armoire à fumée de type rideau d'air sans réglage selon la revendication 1, **caractérisée en ce qu'**un dispositif de poussée configuré pour pousser la bille (3) est prévu sur une paroi interne du corps de soupape (1), dans laquelle le dispositif de poussée comprend une tige de poussée supérieure (8) et une tige de poussée inférieure (9), la tige de poussée supérieure (8) et la tige de poussée inférieure (9) sont connectées l'une à l'autre par un ressort de torsion (10), la tige de poussée inférieure (9) est disposée de manière mobile dans une rainure de coulissement (14) prévue dans la paroi interne du corps de soupape (1) par une plaque de verrouillage (11), la tige de poussée supérieure (8) est située sous la lame rotative (2), et la tige de poussée inférieure (9) est prévue au-dessus de la bille (3) ;
la tige de poussée supérieure (8) est située en dessous de la lame rotative (2) lorsque la lame rotative (2) est dans un état dans lequel la soupape à venturi pouvant être fermée est fermée, une rainure (13) est prévue au niveau d'une position sur la paroi interne du corps de soupape (1) près de la tige de poussée supérieure (8), et la tige de poussée supérieure (8) est configurée pour être inclinée vers la direction de la rainure (13) et rappelée par le ressort de torsion (10).

12. Armoire à fumée de type rideau d'air sans réglage selon la revendication 11, **caractérisée en ce que** la plaque de verrouillage (11) est prévue à l'intérieur de la rainure de coulissement (14), un ressort de compression (12) combiné avec la plaque de verrouillage (11) est prévu à l'intérieur de la rainure de coulissement (14), et le ressort de compression (12) a une fonction de rappel de la tige de poussée inférieure (9) et de la tige de poussée supérieure (8).

13. Armoire à fumée de type rideau d'air sans réglage selon la revendication 11 ou 12, **caractérisée en ce que** deux plaques de verrouillage (11) sont prévues sur la tige de poussée inférieure (9), dans laquelle les deux plaques de verrouillage (11) sont agencées à un intervalle le long d'une direction de hauteur du corps d'armoire (15), et les deux plaques de verrouillage (11) sont toutes deux prévues de manière mobile dans la rainure de coulissement (14) ; et une extrémité la plus en bas de la tige de poussée inférieure (9) est pourvue de coins arrondis.
